# EUROPÄISCHE PATENTSCHRIFT

(11) **EP 1 199 500 B1**
(45) Veröffentlichungstag und Bekanntmachung des Hinweises auf die Patenterteilung: **30.07.2003**
(21) Anmeldenummer: 01124187.4
(22) Anmeldetag: 11.10.2001
(51) Int. Cl.: F16H 61/32, F16H 63/18, F16H 63/30

(54) **Schalteinrichtung eines Getriebes**
Shift actuator of a gearbox
Barillet de commande des passages de vitesses dans une transmission

(30) Priorität: 17.10.2000 DE 10051373
(43) Veröffentlichungstag der Anmeldung: 24.04.2002
(73) Patentinhaber: ZF FRIEDRICHSHAFEN Aktiengesellschaft, 88038 Friedrichshafen (DE)
(72) Erfinder: Baasch, Detlef, 88048 Friedrichshafen (DE); Gumpoltsberger, Gerhard, 88045 Friedrichshafen (DE); Dreibholz, Ralf, 88074 Meckenbeuren (DE)

(56) Entgegenhaltungen:
- EP-A- 0 481 168
- EP-A- 0 547 007
- DE-A- 19 645 791
- DE-A- 19 851 738

## Beschreibung

Die Erfindung betrifft eine Schalteinrichtung eines Getriebes gemäß dem Oberbegriff des Patentanspruchs 1, wie aus der DE 19 645 791 A bekannt.

In der Praxis werden Schaltungen eines Getriebes zur Veränderung einer Übersetzung des Getriebes durchgeführt, um die am Getriebeeingang anliegende Motordrehzahl bzw. das anliegende Motormoment in eine Drehzahl bzw. ein Drehmoment an Abtriebsrädern eines Fahrzeugs umzuwandeln, welche einer gewünschten Fahrgeschwindigkeit bei ausreichenden Antriebsmomenten bzw. Zugkräften entsprechen.

Für eine Änderung einer Getriebeübersetzung ist in der Praxis in einem Getriebe beispielsweise eine Schalteinrichtung vorgesehen, die ein auf einem Bauteil der Schalteinrichtung drehbar geführtes Schaltelement, welches auch unter der Bezeichnung Schaltwalze bekannt ist, aufweist. Diese an sich bekannte Schaltwalze ist üblicherweise mit wenigstens einer Nutenbahn versehen, in die wenigstens eine Schaltgabel eingreift. Bei einer Drehung des Schaltelementes wird die Schaltgabel durch eine definierte Form der Nutenbahn entsprechend axial entlang einer Schaltgabelführung bewegt. Die Schaltwalze wird zur Durchführung einer Schaltung von einem Fahrer über einen Schalthebel manuell oder über eine Antriebseinrichtung fremdkraftbetätigt verdreht.

Aus dem Stand der Technik ist es bekannt, als Antriebseinrichtung zur Fremdkraftbetätigung der Schaltwalze z.B. einen Elektromotor einzusetzen, welcher in dem Getriebe im Bereich der Schaltwalze oft parallel zu dieser angeordnet ist. Zwischen dem Elektromotor und der Schaltwalze ist beispielsweise eine Übersetzungsstufe vorgesehen, über welche die Übertragung einer Drehbewegung des Elektromotors auf die Schaltwalze zur axialen Verstellung der Schaltgabeln erfolgt.

Diese aus der Praxis bekannten Schalteinrichtungen weisen jedoch den Nachteil auf, daß der Einsatz eines Elektromotors zur Betätigung einer Schaltwalze viel Bauraum in einem Getriebe beansprucht, was den heutigen generellen Anforderungen an Baugruppen eines Fahrzeugs, wie beispielsweise einer Verkleinerung der Abmessungen und einer Gewichtsreduzierung der Bauteile, entgegensteht.

Der große Bauraumbedarf der beschriebenen Schalteinrichtung ergibt sich daraus, daß eine Schaltwalze zur Gewährleistung ihrer Funktionalität insbesondere bei Ankopplung mehrerer Schaltgabeln einen großen Durchmesser aufweisen muß. Der große Durchmesser resultiert aus der Tatsache, daß für die verschiedenen angekoppelten Schaltgabeln längere Nutenbahnen vorgesehen werden müssen, um alle separat ansprechen bzw. betätigen zu können, wobei die Schaltwalze maximal lediglich eine Umdrehung ausführen darf. Durch den separat mit einem Gehäuse ausgebildeten, im Bereich der Schaltwalze angeordneten Elektromotor wird zusätzlich Bauraum in dem Getriebe für den Antrieb der Schaltwalze benötigt, der im allgemeinen nicht vorhanden ist bzw. zu einer Vergrößerung der Abmessungen und einer Erhöhung des Gewichts des Getriebes führt.

Der vorliegenden Erfindung liegt daher die Aufgabe zugrunde, eine Schalteinrichtung eines Getriebes zur Verfügung zu stellen, welche nur einen geringen Bauraum in einem Getriebe beansprucht.

Erfindungsgemäß wird diese Aufgabe mit einer Schalteinrichtung eines Getriebes mit den Merkmalen des Patentanspruches 1 gelöst.

Mit der erfindungsgemäßen Schalteinrichtung eines Getriebes kann der Bedarf an Bauraum erheblich gesenkt werden, da der Stator und der Rotor des als Antrieb des nutenbehafteten Schaltelements dienenden Elektromotors in vorteilhafter Weise ohne ein eigenes Gehäuse wenigstens teilweise zwischen dem Schaltelement und dem Bauteil angeordnet ist. Mit dieser Ausgestaltung der erfindungsgemäßen Schalteinrichtung, bei welcher die äußeren Abmessungen gegenüber einem herkömmlichen Schaltelement nicht bzw. nur unerheblich verändert werden müssen, wird durch die Integration des elektrischen Antriebes der Schalteinrichtung in den Bereich zwischen dem Schaltelement und der ihr zugeordneten Achse der benötigte Bauraum verkleinert.

Darüber hinaus ist von Vorteil, daß die ohne eigenes Gehäuse in dem Getriebe angeordnete Stator-Rotor-Einheit des elektrischen Antriebes der Schalteinrichtung eine Bauteilersparnis und eine daraus resultierende Gewichtsersparnis eines Getriebes ermöglicht.

Vorteilhafterweise erfordert die erfindungsgemäße Lösung keine vollständig neue Konstruktion des Antriebsaggregates oder des Getriebes, da sich die elektrische Maschine auch problemlos z.B. in einem abgedichteten, ölhaltigen Bereich bereits vorhandener Getriebetypen integrieren läßt.

Weitere Vorteile und Weiterbildungen der Erfindung ergeben sich aus den Unteransprüchen und aus den nachfolgend anhand der Zeichnung prinzipmäßig beschriebenen Ausführungsbeispielen, wobei funktionsgleiche Bauteile in den beiden Figuren der Zeichnung aus Gründen der Übersichtlichkeit mit gleichen Bezugszeichen bezeichnet sind.
Es zeigt:
- Fig. 1: eine Schalteinrichtung eines Getriebes eines Kraftfahrzeuges mit einem zwischen einem Schaltelement und einer Achse integriertem Elektromotor und
- Fig. 2: eine weitere Ausführungsform der Schalteinrichtung gemäß Fig. 1, wobei das Schaltelement und der Rotor als zwei getrennte Bauteile ausgebildet sind und zwischen diesen beiden ein Umsetzungsgetriebe zur Übertragung einer Drehbewegung vorgesehen ist.

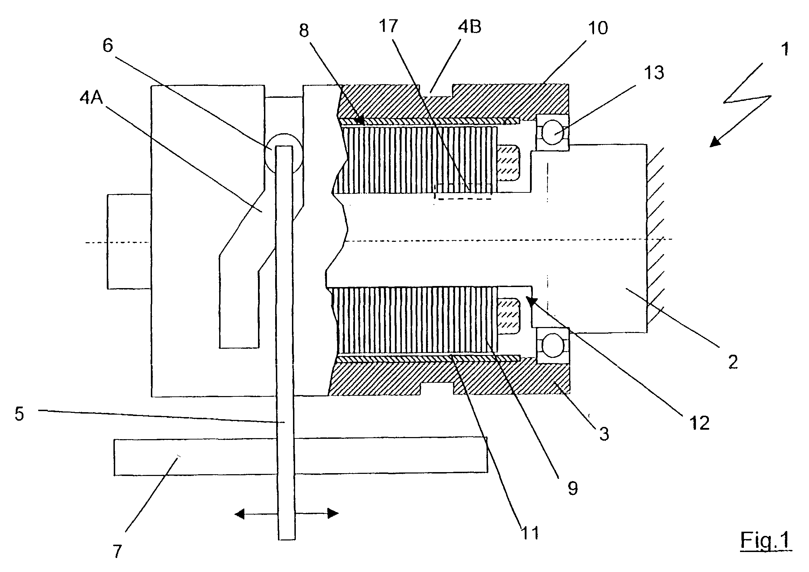

In Fig. 1 ist eine Schalteinrichtung 1 eines Getriebes eines Kraftfahrzeuges mit einem auf einer Achse 2 der Schalteinrichtung 1 drehbar geführten Schaltelement 3 dargestellt. Das Schaltelement 3 ist im vorliegenden Ausführungsbeispiel mit zwei Nutenbahnen 4A, 4B versehen, in welche jeweils eine Schaltgabel 5 eingreift, wobei in Fig. 1 nur eine Schaltgabel dargestellt ist. Es liegt selbstverständlich im Ermessen des Fachmanns das als Schaltgetriebe ausgebildete Schaltelement 3 in Abhängigkeit des jeweiligen Anwendungsfalles mit mehr als zwei Nutenbahnen auszubilden.

Die Schaltgabel 5 greift über einen Führungsstift bzw. eine Führungsrolle 6 in die Nutenbahn 4A ein und ist selbst an ihrem dem Führungsstift 6 abgewandten Ende über eine Schaltgabelführung 7 geführt und in axialer Richtung verschiebbar gelagert. Bei einer Drehung des als rohrförmige Schaltwalze 3 ausgebildeten Schaltelementes wird die Schaltgabel 5 durch die Form der Nutenbahn 4 entsprechend axial entlang der Schaltgabelführung 7 bewegt.

Eine Drehung der Schaltwalze 3 wird über einen mit der Schaltwalze in Wirkverbindung stehenden Elektromotor 8 bewirkt, der einen Stator 9 und einen Rotor 10 umfaßt. Der Elektromotor 8 bzw. die Stator-Rotor-Einheit ist ohne eigenes Gehäuse zwischen der Schaltwalze 3 und der Achse 2, welche hier getriebegehäusefest ausgebildet ist, angeordnet.

Bei der in Fig. 1 dargestellten Ausführungsform der Schalteinrichtung 1 bildet der Rotor 10 mit der Schaltwalze 3 derart eine strukturelle Einheit aus, daß eine Drehbewegung des Rotors 10 direkt auf die Schaltwalze 3 übertragen wird.

Dabei ist der Rotor 10 durch Permanentmagneten gebildet, welche auf der als Träger für die Permanentmagneten vorgesehenen Schaltwalze 3 aufgeklebt sind. Selbstverständlich liegt es im Ermessen des Fachmannes, den Rotor 10 bzw. dessen Permanentmagneten mittels eines anderen, für den jeweiligen Anwendungsfall geeigneten Verbindungsart mit der Schaltwalze 3 zu verbinden.

Der Rotor 10 wird mit seinem gesamten Querschnitt zu einem magnetisch aktiven, flußführenden Bauteil, ohne daß ein geschichtetes Magnetblech bzw. ein typisches Elektromotorenmaterial hierfür erforderlich ist.

Abweichend von der in Fig. 1 gezeigten Ausführung kann die Schaltwalze selbstverständlich auch selbst als Permanentmagnet bzw. aus einem derartigen Material ausgebildet sein, so daß ein zusätzlicher Fertigungsschritt bei der Herstellung der Schalteinrichtung entfällt, weil die Befestigung der Permanentmagneten an der Schaltwalze entfällt. Weiter kann mit dieser Ausgestaltung, bei der der Rotor gleichzeitig die Schaltwalze bildet, eine weitere Gewichtsreduzierung des Getriebes erreicht werden.

Der Stator 9, welcher im Ausführungsbeispiel gemäß Fig. 1 als separates Bauteil ausgeführt ist, aber in einer alternativen Ausführung auch einstückig mit der Achse 2 ausgebildet sein kann, umfaßt als Aktivelemente einen Wickelkopf und ein Eisenjoch und weist eine symmetrische Geometrie mit einem im wesentlichen rechteckigen Querschnitt auf. Seine Außenkontur weist im wesentlichen eine zylindrische Form auf und ist an den ihn umgebenden Rotor 10 des Elektromotors 8 angepaßt. Weiter ist zwischen dem Rotor 10 und dem Stator 9 ein Luftspalt 11 vorgesehen, welcher parallel zu einer Mittelachse der Achse 2 verläuft.

Zu einer weiteren Verringerung des Bauraumbedarfs der Schalteinrichtung 1 ist der Stator 9 in einer Aufnehmung 12 an der Achse 2 angeordnet, wobei zwischen der Achse 2 und dem Stator 9 im Bereich der Aufnehmung 12 eine drehfeste Verbindung 17 vorgesehen ist.

Die drehfeste Verbindung 17 ist im vorliegenden Ausführungsbeispiel als eine Feder-Nut-Verbindung ausgebildet, wobei die drehfeste Verbindung zwischen dem Stator 9 und der Achse 2 selbstverständlich auch durch eine andere geeignete Verbindungsart, wie beispielsweise einem Preßsitz oder einer Verklebung, ausgeführt werden kann.

Die Aufnehmung 12 an der Achse 2, in welcher der Stator 9 angeordnet ist, ist vorliegend als eine sich über den Umfang der Achse 2 erstreckende ringförmige Ausnehmung in der Achse ausgeführt, wodurch der Stator 9 größer dimensioniert werden kann, ohne daß dies einen insgesamt höheren Einbauraum der Schalteinrichtung erfordert.

Die Schaltwalze 3 ist über ein Rillenkugellager 13 drehbar auf der Achse 2 gelagert, so daß die Schaltwalze 3 einerseits ohne bzw. mit nur geringen Lagerreibungsreibungsverlusten Drehbewegungen um ihre Rotationsachse ausführen kann. Andererseits können die bei einer Schaltung durch die axiale Verstellung der Schaltgabel 5 auf die Schaltwalze 3 einwirkenden Axialkräfte von der Schaltwalze 3 auf die Achse 2 auf einfache Art und Weise übertragen werden.

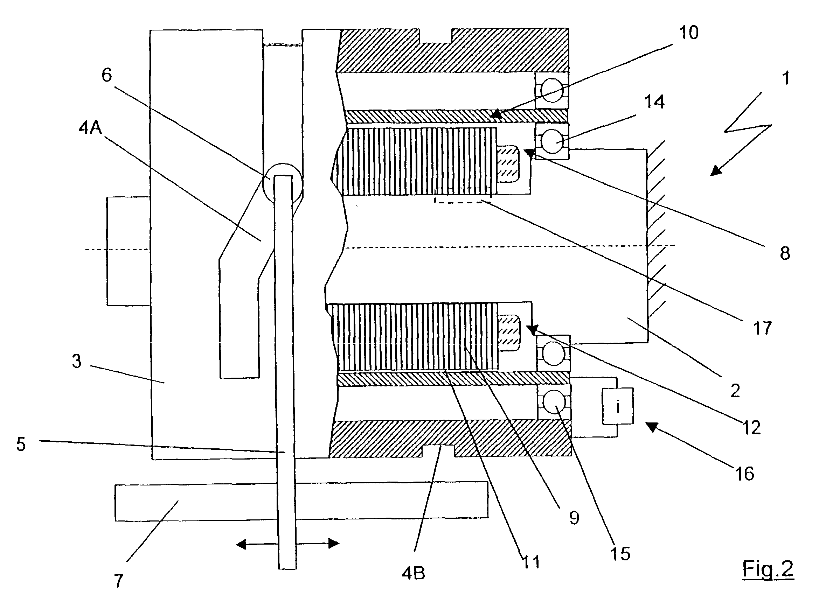

Wie in Fig. 2 dargestellt, sind der Rotor 10 und die Schaltwalze 3 als zwei separate Bauteile ausgebildet, welche auf der Achse 2 drehbar gelagert bzw. geführt sind. Die Lagerung des Rotors 10 ist über ein zwischen dem Rotor 10 und der Achse 3 angeordnetes Rillenkugellager 14 ausgebildet. Die Schaltwalze 3 ist ebenfalls auf der Achse 2 drehbar gelagert, wobei hierfür ein weiteres zwischen dem Rotor 10 und der Schaltwalze 3 angeordnetes Rillenkugellager 15 vorgesehen ist.

Zur Übertragung einer Drehbewegung des Rotors 10 auf die Schaltwalze 3 ist als Verbindung zwischen der Schaltwalze 3 und dem Rotor 10 ein Übersetzungsgetriebe 16 zwischengeschaltet. Das Übersetzungsgetriebe 16 ist im vorliegenden Ausführungsbeispiel nicht näher dargestellt und kann als ein bauraumgünstiges Planetengetriebe als ein einfaches über zwei unterschiedlich große Zahnräder ausgestaltetes Übersetzungsgetriebe oder in einer anderen geeigneten Art und Weise als Übersetzungseinrichtung ausgebildet sein.

Die Ausgestaltung bzw. die Dimensionierung des Rotors 10 und des Stators 9 ist derart vorgesehen, daß die jeweils in dem entsprechenden Anwendungsfall erforderlichen Kräfte, welche für eine Drehbewegung der Schaltwalze 3 benötigt werden, von dem zwischen der Schaltwalze 3 und der Achse 2 angeordneten Elektromotor 8 aufgebracht werden.

Der Elektromotor kann als ein Gleichstrom- oder ein Wechselstrommotor ausgeführt werden, wobei die Auswahl in Abhängigkeit des jeweiligen Anwendungsfalles erfolgt. Der Rotor kann drehrichtungsabhängig oder drehrichtungsunabhängig ausgebildet sein sowie direkt und/oder über mechanische Übersetzungen an die Schaltwalze gekoppelt sein.

Darüber hinaus kann der Rotor wie gezeigt als ein Außenläufer oder aber auch als ein Innenläufer ausgestaltet sein. In letzterem Fall kann der Stator aus dem Bereich zwischen Schaltwalze und Achse zur Ausbildung einer Verbindung mit einem stillstehenden Bauteil austreten.

In den gezeigten Ausführungen stellt die Schaltwalze 3 einen rohrartigen Körper dar, woraus bereits deutlich wird, daß der Begriff "Schaltwalze" nicht geometrisch zu verstehen ist, da er nicht nur kreiszylindrische Körper umfaßt. Vielmehr ist der Begriff "Schaltwalze" funktional im Hinblick auf die Rotation des damit bezeichneten Körpers zu verstehen, welcher unterschiedliche Außen- und Innenkonturen aufweisen kann.

### Bezugszeichen

- 1: Schalteinrichtung
- 2: Achse
- 3: Schaltelement, Schaltwalze
- 4A, 4B: Nutenbahn
- 5: Schaltgabel
- 6: Führungsstift
- 7: Schaltgabelführung
- 8: Elektromotor
- 9: Stator
- 10: Rotor
- 11: Luftspalt
- 12: Aufnehmung
- 13, 14, 15: Rillenkugellager
- 16: Übersetzungsgetriebe
- 17: drehfeste Verbindung

## Patentansprüche

1. Schalteinrichtung eines Getriebes mit einem auf einer Achse (2) drehbar geführten, mit wenigstens einer Nutenbahn (4A, 4B) versehenen Schaltelement (3), wobei in die Nutenbahn wenigstens eine Schaltgabel (5) eingreift, die bei einer Drehung des Schaltelementes durch die Form der Nutenbahn entsprechend axial bewegbar ist, wobei eine Drehung des Schaltelementes über einen mit dem Schaltelement in Wirkverbindung stehenden Elektromotor (8), der einen Stator (9) und einen Rotor (10) aufweist, durchführbar ist, **dadurch gekennzeichnet, daß** der Stator (9) und der Rotor (10) ohne eigenes Gehäuse wenigstens teilweise zwischen dem Schaltelement (3) und der Achse (2) angeordnet ist.

2. Schalteinrichtung nach Anspruch 1, **dadurch gekennzeichnet, daß** der Rotor (10) und das Schaltelement (3) als zwei getrennte Bauteile ausgebildet sind und auf der gleichen Achse (2) drehbar geführt sind.

3. Schalteinrichtung nach Anspruch 1 oder 2, **dadurch gekennzeichnet, daß** als Verbindung zwischen dem Schaltelement (3) und dem Rotor (10) zur Übertragung einer Drehbewegung des Rotors (10) auf das Schaltelement (3) ein Übersetzungsgetriebe (16) vorgesehen ist.

4. Schalteinrichtung nach Anspruch 1, **dadurch gekennzeichnet, daß** der Rotor (10) mit dem Schaltelement (3) eine strukturelle Einheit ausbildet, wobei eine Drehbewegung des Rotors (10) direkt auf das Schaltelement (3) übertragbar ist.

5. Schalteinrichtung nach Anspruch 4, **dadurch gekennzeichnet, daß** der Rotor (10) über das Schaltelement (3) um die Achse (2) drehbar geführt ist.

6. Schalteinrichtung nach einem der Ansprüche 1 bis 5, **dadurch gekennzeichnet , daß** der Stator (9) an der Achse (2) angeordnet ist, wobei zwischen diesen eine drehfeste Verbindung (17) vorgesehen ist.

7. Schalteinrichtung nach Anspruch 6, **dadurch gekennzeichnet, daß** eine sich wenigstens abschnittsweise über den Umfang der Achse (2) erstreckende Aufnehmung (12) vorgesehen ist, in welcher der Stator (9) wenigstens teilweise angeordnet ist.

8. Schalteinrichtung nach einem der Ansprüche 1 bis 7, **dadurch gekennzeichnet, daß** das Schaltelement als rohrförmige Schaltwalze (3) ausgebildet ist.

## Claims

1. Gear shift apparatus for a gearbox, the said apparatus having a gear shift element (3) which is rotatably guided on an spindle (2) and is provided with at least one grooved track (4A, 4B), wherein there engages in the said grooved track at least one gear shift fork (5) which, when rotation of the gear shift element occurs, can be moved axially in a corresponding manner by the shape of the grooved track, and wherein rotation of the said gear shift element can be performed via an electric motor (8) which is in operative connection with the said gear shift element and which has a stator (9) and a rotor (10),
**characterised in that**
the stator (9) and the rotor (10) are disposed, without a housing of their own, at least partially between the gear shift element (3) and the spindle (2).

2. Gear shift apparatus according to claim 1,
**characterised in that**
the rotor (10) and the gear shift element (3) are constructed as two separate components and are rotatably guided on the same spindle (2).

3. Gear shift apparatus according to claim 1 or 2,
**characterised in that**
a transmission gear unit (16) is provided as the connection between the gear shift element (3) and the rotor (10) for the purpose of transmitting a rotational movement of the said rotor (10) to the said gear shift element (3).

4. Gear shift apparatus according to claim 1,
**characterised in that**
the rotor (10) forms a structural unit with the gear shift element (3), under which circumstances a rotational movement of the said rotor (10) can be transmitted directly to the said gear shift element (3).

5. Gear shift apparatus according to claim 4,
**characterised in that**
the rotor (10) is guided via the gear shift element (3) so as to be rotatable about the spindle (2).

6. Gear shift apparatus according to one of claims 1 to 5,
**characterised in that**
the stator (9) is disposed on the spindle (2), a torsion-proof connection (17) being provided between the said stator and spindle.

7. Gear shift apparatus according to claim 6,
**characterised in that**
a recess (12) is provided, which extends over the periphery of the spindle (2), at least in certain sections, and in which the stator (9) is at least partially disposed.

8. Gear shift apparatus according to one of claims 1 to 7,
**characterised in that**
the gear shift element is constructed as a tubular gear shift drum (3).

## Revendications

1. Dispositif de commutation d'une boîte de vitesses comprenant un élément de commutation (3) monté mobile en rotation sur un axe (2) et pourvu d'au moins une rainure guide (4A, 4B), au moins une fourchette de commutation (5) étant engagée dans la rainure guide et étant déplacée axialement par la forme de la rainure guide en réponse à une rotation de l'élément de commutation, une rotation de l'élément de commutation pouvant être commandée au moyen d'un moteur électrique (8) qui est en liaison effective avec l'élément de commutation et qui comprend un stator (9) et un rotor (10), **caractérisé en ce que** le stator (9) et le rotor (10) sont disposés au moins partiellement entre l'élément de commutation (3) et l'axe (2) sans posséder de carter propre.

2. Dispositif de commutation selon la revendication 1, **caractérisé en ce que** le rotor (10) et l'élément de commutation (3) sont constitués par deux éléments séparés et sont guidés mobiles en rotation sur le même axe (2).

3. Dispositif de commutation selon la revendication 1 ou 2, **caractérisé en ce qu'**un mécanisme de transmission (16) est prévu comme liaison entre l'élément de commutation (3) et le rotor (10), pour transmettre un mouvement de rotation du rotor (10) à l'élément de commutation (3).

4. Dispositif de commutation selon la revendication 1, **caractérisé en ce que**. le rotor (10) forme une unité structurelle avec l'élément de commutation (3), un mouvement de rotation du rotor (10) pouvant être transmis directement à l'élément de commutation (3).

5. Dispositif de commutation selon la revendication 4, **caractérisé en ce que** le rotor (10) est guidé mobile en rotation sur l'axe (2) au moyen de l'élément de commutation (3).

6. Dispositif de commutation selon l'une des revendications 1 à 5, **caractérisé en ce que** le stator (9) est disposé sur l'axe (2), une liaison solidaire en rotation (17) étant prévue entre ces deux éléments.

7. Dispositif de commutation selon la revendication 6, **caractérisé en ce qu'**il est prévu un évidement (12) s'étendant sur la périphérie de l'axe (2), au moins par segments et dans lequel le stator (9) est au moins partiellement disposé.

8. Dispositif de commutation selon l'une des revendications 1 à 7, **caractérisé en ce que** l'élément de commutation est constitué par un tambour de commutation tubulaire (3).
